(19) Europäisches Patentamt
European Patent Office
Office européen des brevets

(11) Numéro de publication: **0 225 829**
**A2**

(12) # DEMANDE DE BREVET EUROPEEN

(21) Numéro de dépôt: **86402633.1**

(22) Date de dépôt: **27.11.86**

(51) Int. Cl.⁴: **B 01 J 20/32**
B 01 D 15/08

(30) Priorité: **29.11.85 FR 8517698**

(43) Date de publication de la demande:
**16.06.87 Bulletin 87/25**

(84) Etats contractants désignés:
**AT BE CH DE ES GB GR IT LI LU NL SE**

(71) Demandeur: **UNIVERSITE DE PARIS VAL-DE-MARNE (PARIS XII)**
**Avenue du Général de Gaulle**
**F-94010 Créteil Cédex (FR)**

(72) Inventeur: **Sebille, Bernard**
**45 bis, rue Pierre Louvrier**
**F-92140 Clamart (FR)**

**Piquion, Josée**
**88, rue de Paris C 117**
**F-93100 Montreuil (FR)**

**Boussouira, Boudiaf**
**137, avenue du Pont d'Epinay**
**F-92230 Gennevilliers (FR)**

(74) Mandataire: **L'Helgoualch, Jean**
**OFFICE PICARD 134 Boulevard de Clichy**
**F-75018 Paris (FR)**

(54) **Support minéral utilisable pour la séparation chromatographique des protéines, et procédé de préparation.**

(57) L'invention concerne un support chromatographique.

Le support destiné à réduire l'adsorption des protéines comporte un solide poreux sur lequel est déposée une pellicule d'un polymère, constitué par un polyvinylimidazole, un polyvinylimidazole quaternisé sur l'azote en position 3 par un agent alkylant, ou un copolymère obtenu à partir du vinylimidazole et d'un monomère hydrophile copolymérisable, et éventuellement quaternisé.

Application à la séparation chromatographique rapide des protéines.

EP 0 225 829 A2

**Description**

Support minéral utilisable pour la séparation chromatographique des protéines, et procédé de préparation

La présente invention concerne un nouveau support formé par dépôt d'un polymère sur un oxyde minéral, ayant pour effet d'empêcher l'adsorption des protéines, un procédé pour sa préparation, ainsi que son application à la séparation chromatographique des protéines.

La séparation des protéines peut s'effectuer sur résines échangeuses d'ions, en mettant à profit la propriété des protéines de s'associer aux groupes chargés fixés sur les résines, par exemple sur une résine cellulosique. La fixation de la protéine est d'autant plus forte qu'elle est éloignée de son point isoélectrique. et l'élution peut se faire en augmentant progressivement la force ionique. Toutefois les matériaux de type cellulosique ont des propriétés mécaniques insuffisantes pour supporter des pressions élevées.

Il est souhaitable de pouvoir disposer de matériaux sur lesquels l'adsorption des protéines est faible ou réversible, par exemple pour la réalisation de supports utilisables dans les colonnes de chromatographie.

Divers oxydes minéraux tels que la silice, l'alumine ou l'oxyde de titane, sont utilisés comme phase fixe dans les colonnes de chromatographie. Toutefois ces oxydes présentent des propriétés d'adsorptions non spécifiques qui entrainent une fixation irréversible ou une dénaturation des macromolécules hydrophiles. On a donc cherché à modifier le support pour diminuer ou supprimer l'adsorption irréversible des produits que l'on veut séparer. Le brevet US 4.245.005 décrit une pellicule de polyéthylèneimine de faible masse moléculaire réticulée et adsorbée sur un support poreux tel que l'alumine, utilisable en chromatographie liquide à haute performance (HPLC) pour la séparation des protéines. La réticulation de la polyéthylèimine est nécessaire pour stabiliser la pellicule adsorbée sur le support ainsi que pour faciliter la séparation des protéines.

Comme autres polymères pouvant porter des charges positives utilisés pour constituer des supports pelliculaires après dépôt sur des particules de silice poreuses, on connait le diéthylaminoéthyldextrane (DEAE-dextrane) comme dans le brevet Luxembourgeois 73094, et un copolymère de polyvinylpyridine.

Le brevet EP 0.088.964 décrit des polymères et copolymères vinyliques dérivés de monomères tels que le N-vinylimidazole, susceptibles d'adsorber des protéines. Des propriétés d'affinité spécifique du noyau imidazole vis à vis de l'hémoglobine sont décrites par K. Pommerening et al. (Int. J. Biolog. Macromolecules vol.1, juin 1979, p.79-88), qui laissent supposer que le noyau imidazole n'est pas adapté à la séparation des protéines, d'une manière générale.

La présente invention a pour object un nouveau support utilisable comme support chromatographique pour la séparation rapide des protéines avec un débit d'éluant élevé.

L'invention a également pour objet un nouveau support à base de polyvinylimidazole, de polyvinylimidazole quaternisé, ou de copolymère contenant un polyvinylimidazole, quaternisé le cas échéant, adsorbé sur un solide poreux, applicable à la séparation chromatographique des protéines.

L'invention concerne encore un procédé pour préparer un tel support par dépôt d'un polymère ou d'un copolymère à base de vinylimidazole par contact d'un solide poreux avec une solution contenant le polymère ou le copolymère.

Le nouveau support conforme à la présente invention est du type comportant un solide poreux sur lequel est déposée une pellicule d'un polymère et se distingue en ce que le polymère est un polyvinylimidazole, un polyvinylimidazole quaternisé sur l'azote en position 3 par un agent alkylant, ou un copolymère obtenu à partir du vinylimidazole et d'un monomère hydrophile copolymérisable, et éventuellement quaternisé.

Le polyvinylimidazole utilisé dans l'invention est un polymère connu comportant l'unité récurrente représentée par l'une ou l'autre des formules ci-dessous:

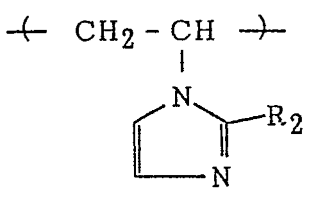

ou

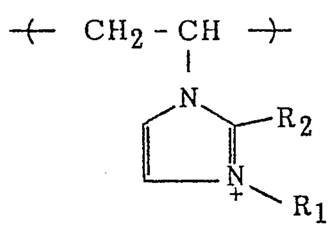

dans laquelle $R_1$ représente un groupe alkyle linéaire ou ramifié de 1 à 4 atomes de carbone, par exemple un groupe méthyle, éthyle ou n-propyle, ou un groupe de formule $-CH_2CHOH-CH_2X$, X étant un atome d'hydrogène, un atome d'halogène tel que le chlore, le brome ou l'iode, un groupe hydroxy ou une chaîne hydroxyalkyle de 1 à 4 atomes de carbone, et $R_2$ représente un atome d'hydrogène ou un groupe méthyle.

On peut utiliser un polyvinylimidazole de masse moléculaire comprise par exemple entre 5.000 et 200.000.

Le monomère copolymérisable peut être un dérivé à insaturation éthylénique de formule $CH_2=CR_3R_4$ dans laquelle $R_3$ représente un atome d'hydrogène ou un groupe méthyle, et $R_4$ représente un groupe alcoxy inférieur de 1 à 3 atomes de carbone, un groupe amino, diméthylamino, cyano, N-pyrroli done, et en particulier N-pyrrolidone-2, un groupe de formule $-COOR_5$ où $R_5$ est un atome d'hydrogène ou un groupe méthyle, éthyle, époxyéthyle, 2,3-époxypropyle, ou hydroxyalkyle de 1 à 3 atomes de carbone, un groupe $-CONR_6R_7$ où

$R_6$ et $R_7$, identiques ou différents, représentent un atome d'halogène, un groupe alkyle de 1 à 3 atomes de carbone, ou hydroxyalkyle de 1 à 4 atomes de carbone et en particulier tri(hydroxyméthyl)méthyle, ou encore un reste silanique de formule $-SiX_3$ où X est un atome d'hydrogène ou d'halogène (par exemple le chlore ou le brome) ou un groupe alcoxy de 1 à 4 atomes de carbone, un groupe acétoxy ou un groupe phénoxy.

Le monomère copolymérisable peut être plus particulièrement choisi parmi l'acrylamide, la N-vinylpyrrolidone, le vinyltriméthoxysilane, le vinyltriacétoxysilane, le vinyltrichlorosilane, l'acrylate d'éthylène glycol, l'acrylate de glycidyle et le trihydroxyméthyl acrylamide.

La polymérisation des comonomères s'effectue par les techniques usuelles.

Le procédé de préparation du support conforme à l'invention consiste à imprégner le solide poreux par une solution contenant le polyvinylimidazole.

Il est préférable que le polymère soit soluble à concentration élevée dans le solvant afin d'assurer une bonne adsorption sur le solide poreux. On peut utiliser par exemple l'eau ou un alcool tel que le méthanol et l'éthanol, qui peut servir également à rincer le solide après imprégnation. Les conditions de préparation du support conduisent à une adsorption suffisamment forte pour éviter l'extraction du polymère au cours du rincage.

Le solide poreux est un oxyde minéral du type utilisé en chromatographie, tel que la silice, l'alumine et l'oxyde de titane ou de zirconium. Le diamètre des pores peut être très variable et on peut choisir librement une porosité comprise entre 5 et 500nm en fonction de l'application envisagée. La granulométrie peut s'étendre de quelques microns à quelques millimètres.

La quaternisation de l'atome d'azote en position 3 du noyau imidazole peut s'effectuer suivant les méthodes usuelles au moyen d'un agent alkylant. On peut par exemple faire agir un hydrocarbure halogéné réactif tel que l'iodométhane, un époxyde, un polyépoxyde ou une épihalohydrine, sur le polyvinylimidazole déposé sur le solide poreux, en réalisant une suspension du solide poreux imprégné dans une solution du réactif alkylant, de préférence dans un solvant polaire tel qu'un alcool (par exemple le méthanol, l'éthanol ou l'isopropanol), à température ambiante ou à chaud, et de préférence à une température inférieure à 50°C environ.

Le polyvinylimidazole en solution aqueuse, possède, en raison de son caractère polyélectrolytique, un $pK_a$ apparent variant entre 4,5 et 6 selon le degré d'ionisation et la nature des sels présents dans la solution. Cette propriété peut être mise à profit pour la réalisation de la phase fixe d'une colonne chromatographique utilisable pour la séparation des protéines car le solide minéral poreux, imprégné à saturation par une solution aqueuse ou organique de polyvinylimidazole, permet une récupération quantitative des protéines après passage sur la colonne. De plus, à un pH légèrement acide, le support de l'invention comportant le polyvinylimidazole déposé sur le solide minéral poreux, présente des propriétés d'échange d'anions. A un pH supérieur à 7, la colonne constituée du support suivant l'invention est pratiquement dépourvue de charges positives et une séparation des protéines peut être aisément obtenue en fonction de la taille des molécules ou du caractère plus ou moins hydrophobe du soluté utilisé.

Il est ainsi possible d'utiliser le support conforme à l'invention pour la séparation de protéines en faisant intervenir un mécanisme d'exclusion par la taille, d'échange d'ions, ou de chromatographie hydrophobe, selon le cas.

L'utilisation d'un polyvinylimidazole quaternisé, conformément à l'invention, permet de donner, pour toutes valeurs du pH, des propriétés d'échange d'anions au support imprégné par le polymère et de réaliser des séparations de protéines plus efficaces.

On peut par exemple séparer aisément et efficacement diverses protéines telles que l'hémoglobine, l'ovalbumine, la conalbumine, la myoglobine, le cytochrome C, le lysozyme, la transferrine, la globuline, la thyroglobuline, la sérum albumine humaine ou bovine, etc, ainsi que des petites molécules chargées négativement telles que l'AMP, l'ADP, et l'ATP.

Les caractéristiques et avantages de l'invention apparaîtront plus en détail dans la description ci-après relative à des modes préférentiels et non limitatifs de réalisation.

## EXEMPLE 1

On prépare 100 ml d'une solution aqueuse à 0,5% de polyvinylimidazole de masse moléculaire égale à environ 100.000, préparé selon la méthode de G.G. Skovortsova et al. "Polymer Science URSS" A14, no3 p.587-597 (1972). dont on imprègne 7g d'une silice de porosité égale à 30nm (silica Lichrospher Merck) pour constituer une colonne chromatographique de dimension 15cm x 4mm, après rinçage avec 500ml d'eau.

En utilisant comme éluant une solution de tampon phosphate de sodium 0,1M à pH 7,5, pour diverses protéines. on réalise une chromatographie d'exclusion permettant de sépa rer en fonction de leur taille les protéines indiquées ci-dessous:

1 cytochrome
2 myoglobine
3 ovalbumine
4 lysozyme
5 sérum albumine humaine
6 catalase
7 chymotripsinogène
8 transferrine
9 globuline
10 thyroglobuline

En traçant une courbe d'étalonnage, la relation entre le volume d'élution, porté en abscisse, et le logarithme de la masse moléculaire de la protéine, indiqué en ordonnée, est mise en évidence. L'écart par rapport à la relation linéaire, observé pour certaines protéines, peut s'expliquer par des interactions hydrophobes.

EXEMPLE 2

Les expérimentations effectuées montrent que des protéines telles que la sérum albumine humaine, le lysozyme et l'ovalbumine, peuvent être séparées d'un mélange les contenant, par élution sur une colonne de silica imprégnée de polyvinylimidazole selon l'invention.

On utilise une colonne identique à celle de l'exemple 1 (porosité 30nm, granulométrie 10µm) et on effectue une élution par une solution de phosphate à pH 5. Cette valeur du pH correspond au maximum de rétention pour l'albumine où l'interaction ionique entre la protéine et les charges positives du support est forte.

L'élution avec une solution de phosphate 0.1 M à pH 5 permet la résolution d'un mélange de sérum albumine humaine, de lysozyme et d'ovalbumine dans de bonnes conditions de rendement et de pureté des produits séparés.

EXEMPLE 3

On utilise un support chromatographique constitué par la même silice que dans l'exemple précédent, ayant la même granulométrie et la même porosité, mais en l'imprégant par une solution de polyvinylimidazole à 10% dans le méthanol.

On utilise comme éluant une solution de sulfate d'ammonium dans un tampon phosphate 0,1M à pH 8 et on effectue plusieurs élutions en faisant varier la concentration du sulfate d'ammonium afin de mesurer le volume de rétention de plusieurs protéines avec des solutions de force ionique variable. A ce pH, le support est neutre et la mesure des volumes de rétention en fonction de la concentration en sel met en évidence les interactions hydrophobes; l'élution permet de classer les protéines dans l'ordre d'hydrophobie croissante:
Cytochrome C < myoglobine < sérum albumine bovine < ovalbumine < conalbumine < lysozyme.

EXEMPLE 4

On utilise comme support une silice Vydac (diamètre des particules 10µm; porosité 30nm; contenu en azote 0,8%) que l'on imprègne par une solution de polyvinylimidazole par le même procédé que dans l'exemple 3.

On effectue ensuite une quaternisation du polyvinylimidazole en procédant comme indiqué ci-après.

10 g de silice enrobée de polyvinylimidazole sont placés dans 200ml de méthanol et on ajoute 7ml d'épichlorhydrine. La suspension ainsi obtenue est maintenue sous agitation pendant 10mn à température ambiante, puis elle est portée à 40°C pendant 40mn. La silice est ensuite filtrée et rincée avec 1 litre de méthanol.

On réalise, au moyen de ce support, une colonne chromatographique de 7,5cm x 4mm. On effectue une élution dans les conditions indiquées ci-dessous:
Eluant A : tris acétate 15 mM (pH 8)
Eluant B : A + NaCl 0,5M
Détection à 280nm; sensibilité à 0,05 aufs; débit 1ml/mn.
Composition de l'éluant : éluant A pendant 1mn, puis gradient linéaire de A à B pendant 20 mn.

On sépare ainsi les quatre protéines suivantes : myoglobine (1), hémoglobine (2), conalbumine de type I (3), ovalbumine de type IV (4). Le chromatogramme obtenu est représenté sur la figure 1.

EXEMPLE 5

On procède comme dans l'exemple 4, en utilisant une silica Nucleosil (granulométrie 10µm; porosité 30nm; contenu en azote 0,9%) imprégnée d'un copolymère N-vinylimidazole -N-vinylpyrrolidone, contenant 25% de vinylimidazole.

La quaternisation s'effectue comme indiqué dans l'exemple 4, et on prépare ainsi une colonne chromatographique. L'élution d'un mélange de petites molécules s'effectue dans les conditions indiquées ci-dessous:
Eluant A : tris acétate 15 mM (pH 8)
Eluant B : A + $Na_2SO_4$ 0,25M
Détection à 254nm; sensibilité à 0,2 aufs; débit 2ml/mn. Composition de l'éluant : solvant pendant 1mn et gradient linéaire de A à B pendant 60mn.

On sépare ainsi un mélange constitué par : adénosine monophosphate (AMP), adénosine diphosphate (ADP) et adénosine triphosphate (ATP). Le chromatogramme est représenté sur la figure 2.

En utilisant la même colonne que ci-dessus et en effectuant une élution dans les mêmes conditions, mais avec l'éluant B suivant:
Eluant B : A + $Na_2SO_4$ 0,15 M,

On sépare les quatre mêmes protéines que dans l'exemple 4, c'est-à-dire : myoglobine (b), hemoglobine (d), conalbumine (f,g) et ovalbumine (h,i,j). Le chromatogramme est représenté sur la figure 3.

EXEMPLE 6

On procède comme dans l'exemple 5 pour préparer la même colonne chromatographique à base de silice imprégnée du même copolymère, mais en effectuant la quaternisation de la manière suivante:

10g de silice enrobée de copolymère sont placés dans 200 ml de méthanol et on ajoute 10 g de diglycidyl éther. Le mélange est maintenu sous agitation à température ambiante pendant 8 heures, puis on chauffe à 40°C pendant 1 heure. La silice est filtrée et rincée avec 500 ml de méthanol.

La séparation d'un mélange de protéines est effectuée à l'aide d'une colonne chromatographique remplie de silice préparée comme indiqué ci-dessus.
Eluant A : tris acétate 15 mM (pH 8)
Eluant B : A + $Na_2SO_4$ 125 mM
Détection à 280nm; sensibilité à 0,1 aufs; débit 1 ml/mn;
Composition de l'éluant : éluant A pendant 1 mn et gradient linéaire de A à B pendant 60 mn.

On sépare ainsi les protéines suivantes : myoglobine, hemoglobine, conalbumine, ovalbumine.

## Revendications

1. Support destiné à réduire l'adsorption des protéines et permettant leur séparation, comportant un solide poreux sur lequel est déposée une pellicule d'un polymère, caractérisé en ce que le polymère est un polyvinylimidazole, un polyvinylimidazole quaternisé sur l'azote en position 3 par un agent alkylant, ou un copolymère obtenu à partir du vinylimidazole et d'un monomère hydrophile copolymérisable, et éventuellement quaternisé.

2. Support selon la revendication 1, caractérisé en ce que le polyvinylimidazole comporte l'unité récurrente représentée par l'une des formules:

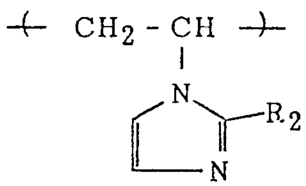

ou

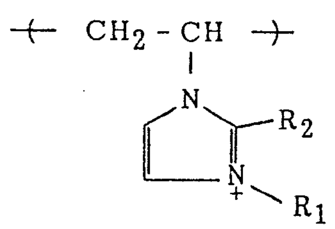

dans laquelle $R_1$ représente un groupe alkyle linéaire ou ramifié de 1 à 4 atomes de carbone, ou un groupe $-CH_2CHOH-CH_2X$, X étant un atome d'hydrogène ou d'halogène, un groupe hydroxy ou une chaîne hydroxyalkyle de 1 à 4 atomes de carbone, et $R_2$ représente un atome d'hydrogène ou un groupe méthyle.

3. Support selon la revendication 1, caractérisé en ce que le monomère hydrophile copolymérisable est un dérivé de formule $CH_2=CR_3R_4$ dans laquelle $R_3$ est un atome d'hydrogène ou un groupe méthyle, et $R_4$ est un groupe alcoxy de 1 à 3 atomes de carbone, un groupe amino, diméthylamino, cyano, N-pyrrolidone, un groupe de formule $-COOR_5$ où $R_5$ est un atome d'hydrogène ou un groupe méthyle, éthyle, époxyéthyle, 2,3-époxypropyle ou hydroxyalkyle de 1 à 3 atomes de carbone, un groupe de formule $-CONR_6R_7$ où $R_6$ et $R_7$, identiques ou différents, représentent un atome d'halogène, un groupe alkyle de 1 à 3 atomes de carbone, ou un groupe hydroxyalkyle de 1 à 4 atomes de carbone, ou encore un reste silanique de formule $-SiX_3$ où X est un atome d'halogène ou un groupe alcoxy de 1 à 4 atomes de carbone, acétoxy ou phénoxy.

4. Support selon la revendication 3, caractérisé en ce que le monomère hydrophile copolymérisable est choisi parmi l'acrylamide, la N-vinylpyrrolidone, le vinyltriméthoxysilane, le vinyltriacétoxysilane, le vinyltrichlorosilane, l'acrylate d'éthylène glycol, l'acrylate de glycidyle et le trihydroxyméthyl acrylamide.

5. Support selon la revendication 1, caractérisé en ce que le solide poreux est choisi parmi la silice, l'alumine et l'oxyde de titane ou de zirconium.

6. Procédé de préparation d'un support selon la revendication 1, caractérisé en ce que l'on dissout le polyvinylimidazole dans l'eau ou un alcool, on imprègne le solide poreux avec l'eau ou l'alcool contenant le polyvinylimidazole, on rince le solide poreux avec l'eau ou l'alcool, et on effectue le cas échéant une quaternisation.

7. Procédé selon la revendication 6, caractérisé en ce que l'alcool est choisi parmi le méthanol et l'éthanol.

8. Procédé selon la revendication 6, caractérisé en ce que la réaction de quaternisation s'effectue au moyen d'un agent alkylant choisi parmi un hydrocarbure halogéné réactif, un époxyde, un polyépoxyde ou une épihalohydrine.

9. Procédé selon la revendication 8, caractérisé en ce qu'on réalise une suspension du solide poreux imprégné de polyvinylimidazole, dans une solution du réactif alkylant dans un solvant polaire.

10. Procédé selon la revendication 9, caractérisé en ce que la réaction de quaternisation s'effectue à une température inférieure à 50 C environ.

11. Support pour la séparation chromatographique des protéines caractérisé en ce qu'il est constitué par un solide poreux sur lequel est déposée une pellicule de polymère selon l'une quelconque des revendications 1 à 5.